# EUROPÄISCHE PATENTANMELDUNG

(11) **EP 1 510 654 A1**
(43) Veröffentlichungstag der Anmeldung: **02.03.2005**
(21) Anmeldenummer: 03023592.3
(22) Anmeldetag: 16.10.2003
(51) Int. Cl.: F01D 9/04, F01D 11/00, F01D 5/22, F01D 5/14

(54) **Einstückige Turbinenbeschaufelungseinheit und Verfahren zur Herstellung einer einstückigen Turbinenbeschaufelungseinheit**

(30) Priorität: 25.08.2003 EP 03019187
(71) Anmelder: SIEMENS AKTIENGESELLSCHAFT, 80333 München (DE)
(72) Erfinder: Gross, Heinz-Jürgen, Dr., 45478 Mülheim (DE)

(57) **Zusammenfassung**

Turbinenschaufeln nach dem Stand der Technik weisen oft Dichtungen auf, die versagen können, so dass es zu einem erhöhten Kühlluftverbrauch kommen kann. Ebenso können mit mehreren Schaufelblättern bei Segmeten mit Wärmespannungen auftreten. Dies kann zu Rissschädigungen und zu einem Versagen des Bauteils führen.

Das erfindungsgemäß ausgebildete einstückige Turbinenbeschaufelungssegment (22) umfasst jeweils mehrere Schaufelblätter und weist Schaufelplattformbereiche (10',10'',10''') auf, die zumindest teilweise gegeneinander beweglich ausgebildet sind. Somit führen Wärmeunterschiede nicht zu Wärmespannungen, da die Plattformbereiche (10',10'',10''') beweglich sind und auftretende Wärmespannungen nicht zu einer Deformierung führen.

## Beschreibung

Die Erfindung betrifft eine einstückige Turbinenbeschaufelungseinheit gemäß Anspruch 1 und ein Verfahren zur Herstellung einer einstückigen Turbinenbeschaufelungseinheit gemäß Anspruch 18.

In einer Turbine (Dampf oder Gas (stationär oder Flugzeug)) ist auf einer Welle eine Scheibe angeordnet, in der mehrere Turbinenschaufeln befestigt werden. Zwischen den einzelnen Turbinenschaufeln bestehen jedoch im Bereich der Schaufelplattformen Spalte, die abgedichtet werden müssen, damit nicht zuviel Kühlluft durch diese Spalte gelangen kann, beispielsweise in den Heißgasbereich einer Gasturbine.

Die Dichtungen dichten oft nicht vollständig ab und können auch durch Bruch oder sonstiges zerstört werden, so dass keine Abdichtung mehr gegeben ist.

Zur Lösung dieses Problems werden Bauteile hergestellt, die zumindest zwei Schaufelblätter aufweisen, wie es in der US-PS 5,743,713 dargestellt ist. In Folge von Wärmespannungen kommt es bei sehr großen Bauteilen jedoch oft zur Rissschädigung.

Es ist daher Aufgabe der Erfindung, eine Turbinenbeschaufelungseinheit bzw. ein Verfahren zur Herstellung einer Turbinenbeschaufelungseinheit aufzuzeigen, bei der bzw. dem die oben genannten Nachteile überwunden werden.

Die Aufgabe wird gelöst durch eine Turbinenbeschaufelungseinheit gemäß Anspruch 1, bei dem die Turbinenbeschaufelungseinheit mehrere Schaufelplattformbereiche aufweist, die zumindest teilweise gegeneinander beweglich ausgebildet sind.

Die Aufgabe wird weiterhin gelöst durch ein Verfahren zur Herstellung einer einstückigen Turbinenbeschaufelungseinheit nach Anspruch 1, die durch ein Gussverfahren hergestellt wird gemäss Anspruch 18.

Die in den Unteransprüchen aufgelisteten Maßnahmen stellen weitere vorteilhafte Weiterbildungen dar.

Die in den Unteransprüchen aufgelisteten Maßnahmen können in vorteilhafter Art und Weise miteinander kombiniert werden.

Es zeigen
- Figur 1: eine Turbinenschaufel nach dem Stand der Technik,
- Figur 2,3,4: eine erfindungsgemäß ausgebildete einstückige Turbinenbeschaufelungseinheit,
- Figur 5,6,7,8,9,10,11: weitere Ausführungsbeispiele einer erfindungsgemäß ausgebildeten einstückigen Turbinenbeschaufelungseinheit,
- Figur 12: eine Gasturbine und
- Figur 13: eine Dampfturbine.

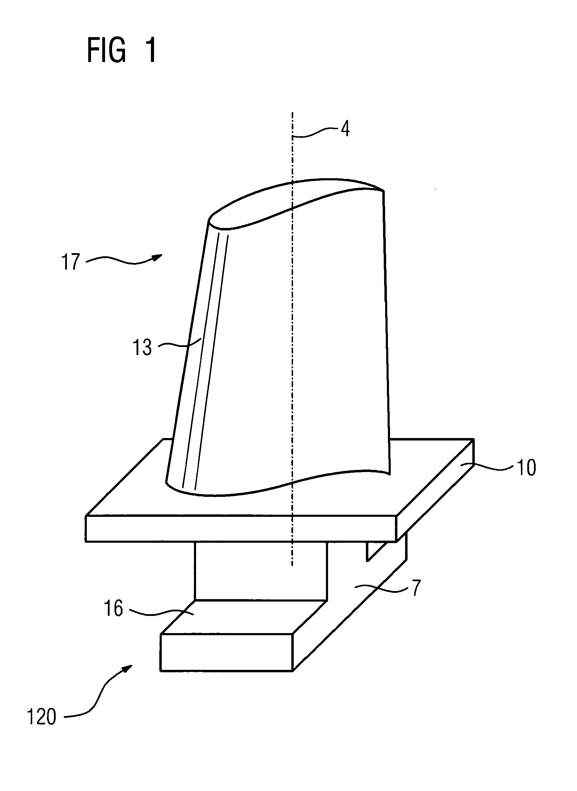

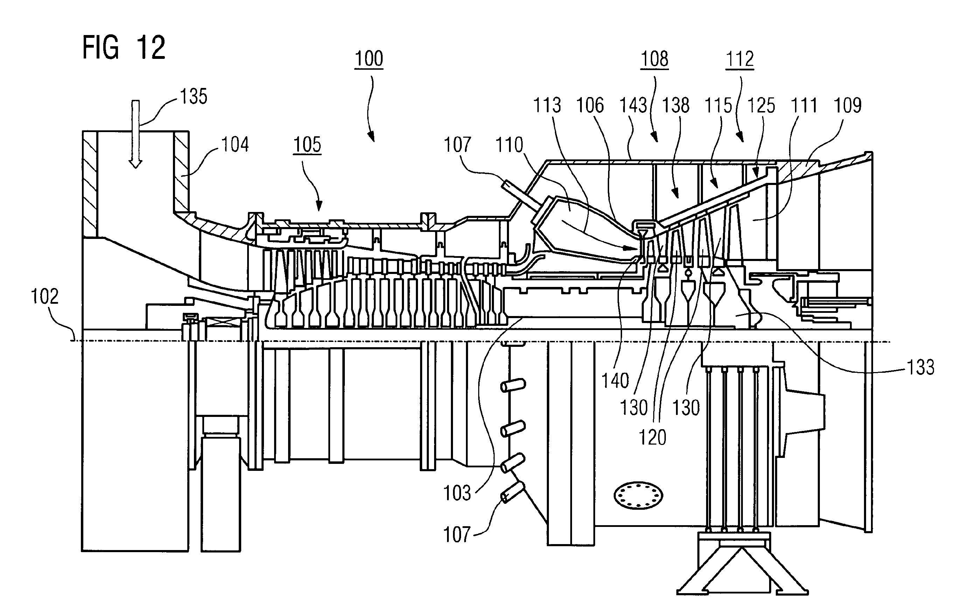

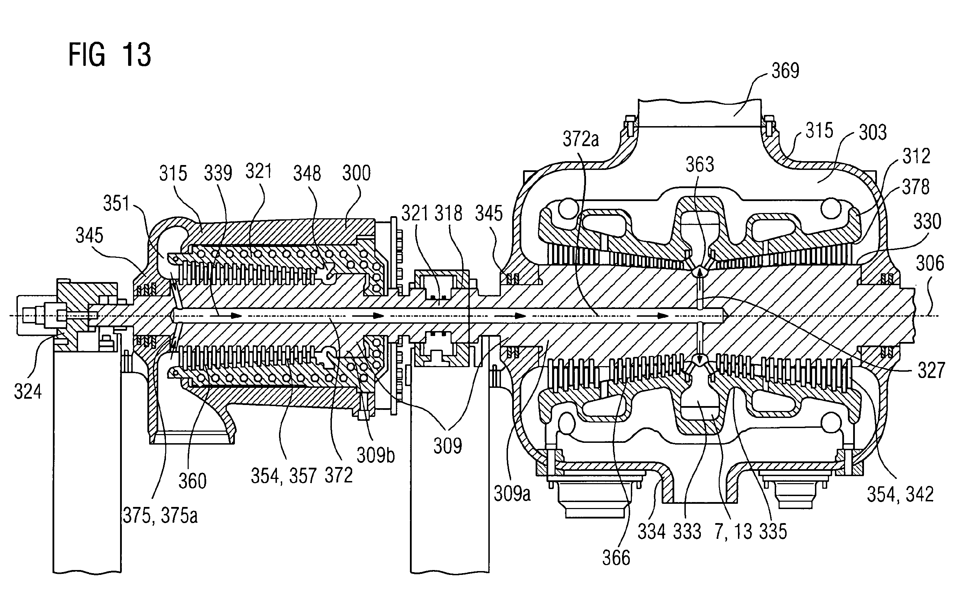

Figur 1 zeigt in perspektivischer Ansicht eine Turbinenlaufschaufel 120 nach dem Stand der Technik, die sich entlang einer Längsachse 4 erstreckt.
Die Laufschaufel 120 weist entlang der Längsachse 4 aufeinander folgend einen Befestigungsbereich 7, eine daran angrenzende Schaufelplattform 10 sowie ein Schaufelblatt 13 auf. Bei einer Leitschaufel 130 (Fig. 12) ist beispielsweise auch an der Schaufelspitze (Kopfteil 17) auch eine Schaufelplattform 19 vorhanden.
Im Befestigungsbereich 7 ist ein Schaufelfuß 16 gebildet, der zur Befestigung der Laufschaufel 120 an der Welle 103 einer in der Figur 12, 13 dargestellten Strömungsmaschine dient.

Der Schaufelfuß 16 ist z.B. als Hammerkopf ausgestaltet. Andere Ausgestaltungen, beispielsweise als Tannenbaum- oder Schwalbenschwanzfuß sind möglich.
Bei herkömmlichen Laufschaufeln 120 werden in allen Bereichen 7, 10, 13 der Laufschaufel 120 z.B. massive metallische Werkstoffe verwendet. Die Laufschaufel 120 kann hierbei durch ein Gussverfahren, durch ein Schmiedeverfahren, durch ein Fräsverfahren oder Kombinationen daraus gefertigt sein.

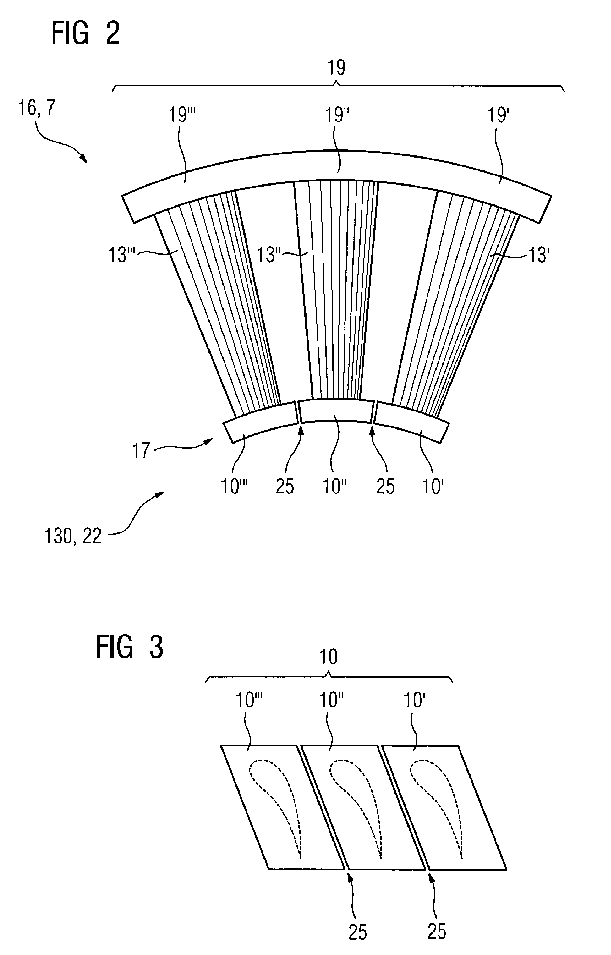

Figur 2 zeigt eine einstückige Turbinenbeschaufelungseinheit 22, in diesem Fall eine Leitschaufel 130 (Fig. 12), die beispielsweise drei Schaufelblätter 13', 13'', 13''' aufweist (Drilling).
Die Turbinenbeschaufelungseinheit 22 ist einstückig ausgebildet und kann für eine Gas- (Figur 12 oder Flugzeugturbine) oder Dampfturbine 300, 303 (Fig. 13) verwendet werden.
Die Schaufelplattform 19 am Fußteil 16 der Leitschaufel 130 kann an einem Gehäuse (Turbinengehäuse, Verdichtergehäuse) befestigt oder angeordnet sein.
Die Schaufelplattform 10 am Kopfteil 17 ist beispielsweise in drei Schaufelplattformbereiche 10', 10'', 10''' aufgeteilt. Die Turbinenbeschaufelungseinheit 22 weist im Fußteil 16 für jedes Schaufelblatt 13', 13'', 13''' einen Schaufelplattformbereich 19', 19'', 19''' auf, die einstückig und starr miteinander verbunden ausgebildet sind.
Hier ist die Schaufelplattform 19 des Fußteils 16 in Umfangsrichtung länger ausgebildet als die Schaufelplattform 10 am Kopfteil 17.

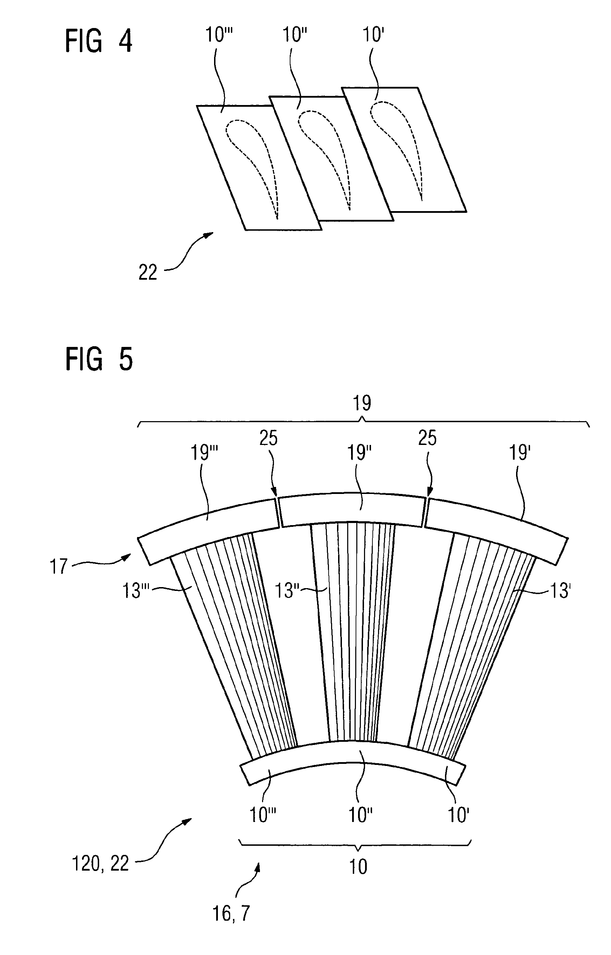

Die Schaufelplattform 10 am Kopfteil 17 ist oder wird entlang von Trennlinien mit definiertem Spalt 25 in drei Schaufelplattformbereiche 10', 10'', 10''' voneinander getrennt (Fig. 3). Durch den Spalt 25 können sich die Schaufelplattformbereiche 10', 10'' und 10''' jeweils gegeneinander bewegen, wie es in Figur 4 exemplarisch dargestellt ist. Somit werden aufgrund von Wärmeunterschieden, wenn die Turbinenbeschaufelungseinheit 22 im Einsatz ist, keine Wärmespannungen in der Schaufelplattform 10 gemäß Figur 2 erzeugt, da die Spannung durch Bewegung der einzelnen Schaufelplattformbereiche 10', 10'', 10''' untereinander ausgeglichen wird. Bei der Wärmeausdehnung pressen sich die Schaufelplattformbereiche 10', 10'', 10''' gegeneinander an, so dass eine Dichtung zwischen den Schaufelplattformbereichen 10', 10", 10''' entfallen kann, da die Schaufelplattformbereiche 10', 10'', 10''' sich durch das Aneinanderpressen zumindest teilweise oder ganz gegeneinander abdichten.

Als Material für die einstückige Turbinenbeschaufelungseinheit 22 kann eine Keramik oder ein Metall bzw. Legierung verwendet werden. Insbesondere ist dies eine eisen-, nickeloder kobaltbasierte Superlegierung, wie sie bei Gasturbinenschaufeln verwendet wird.

Die Schaufelblätter 13 und die Schaufelplattformen 10, 19 können Beschichtungen aufweisen. Dies sind z.B. metallische Korrosionsschutzschichten und/oder keramische Wärmedämmschichten.

Figur 3 zeigt eine Draufsicht auf die Turbinenbeschaufelungseinheit 22 gemäß Figur 2.

Die Turbinenbeschaufelungseinheit 22 wird beispielsweise mittels eines Gießverfahrens hergestellt. Die Schaufelplattformbereiche 10', 10'', 10''' der Schaufelplattform 10 des Kopfteils 17 können dabei noch starr miteinander verbunden sein und erst danach werden die Schaufelplattformbereiche 10', 10'', 10''' voneinander getrennt sein, wohingegen die Schaufelplattformbereiche 19', 19", 19''' starr miteinander verbunden bleiben.

Es ist aber auch möglich, bereits beim Gießen eine entsprechende Trennung der Schaufelplattformbereiche 10', 10'', 10''' von vornherein vorzusehen.

Figur 5 zeigt ein weiteres Ausführungsbeispiel einer einstückigen Turbinenbeschaufelungseinheit 22.
Die einstückige Turbinenbeschaufelungseinheit 22 ist in diesem Fall eine Laufschaufel 120 als Beschaufelungseinheit (Fig. 12). Daher sind Kopfteil 17 und Fußteil 16 umgekehrt wie in Fig. 2 angeordnet, da die Befestigung der Turbinenschaufel 22 nicht am Gehäuse sondern an der Turbinenwelle oder Rotor 103 (Fig. 12) erfolgt.
Hier ist daher die Schaufelplattform 19 am Kopfteil 17 in Umfangsrichtung länger ausgebildet als die Schaufelplattform 10 am Schaufelfuß 16.
An die Schaufelplattformbereiche 10', 10" und 10''' grenzt der Befestigungsbereich 7 an, der in einer Scheibe oder dem Rotor 103 befestigt ist. Hier ist die Schaufelplattform 19 am Kopfteil 17 wiederum in drei voneinander getrennte und gegeneinander bewegliche Schaufelplattformbereiche 19', 19" und 19''' aufgeteilt.

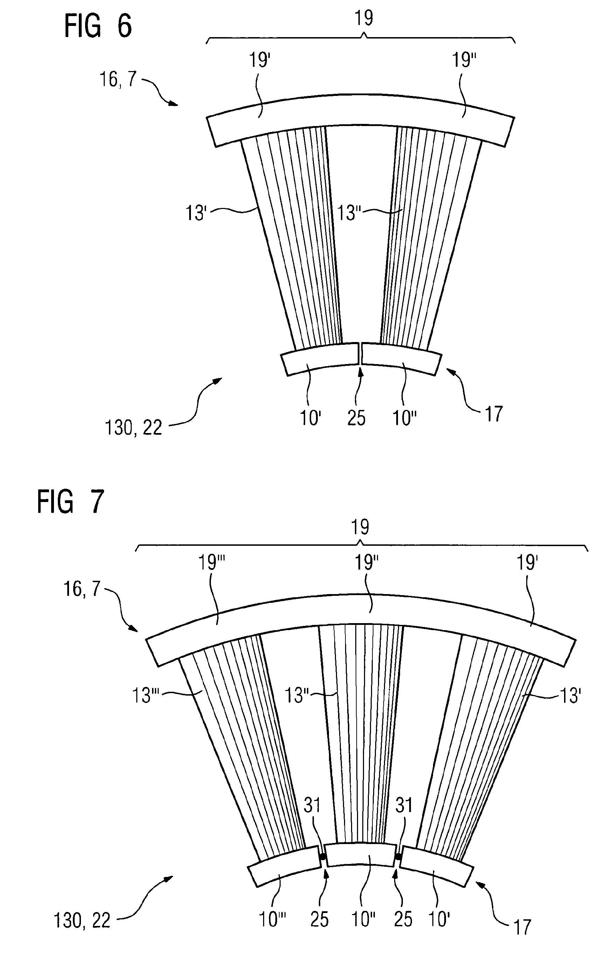

Figur 6 zeigt eine Leitschaufel 22, 130, vergleichbar zu einer Leitschaufel 130 gemäss Figur 2, wohingegen die Leitschaufel 130 der Figur 6 als Zwilling aufgeführt ist, d.h. nur zwei Schaufelblätter 13', 13'' aufweist.
Im Kopfbereich 17 sind die Schaufelplattformbereiche 10', 10'' wiederum durch einen definierten Spalt 25 voneinander getrennt.

Figur 7 zeigt ein weiteres Ausführungsbeispiel einer erfindungsgemäß ausgebildeten einstückigen Turbinenbeschaufelungseinheit 22.

Hier ist wiederum eine Leitschaufel 130 als Beschaufelungseinheit dargestellt. In dem Spalt 25 zwischen den Schaufelplattformbereichen 10', 10'' und 10''' des Kopfbereichs ist im Gegensatz zur Figur 2 jeweils eine Dichtung 31 vorhanden. Hier kann jede bekannte Dichtung zwischen Schaufelplattformen verwendet werden.

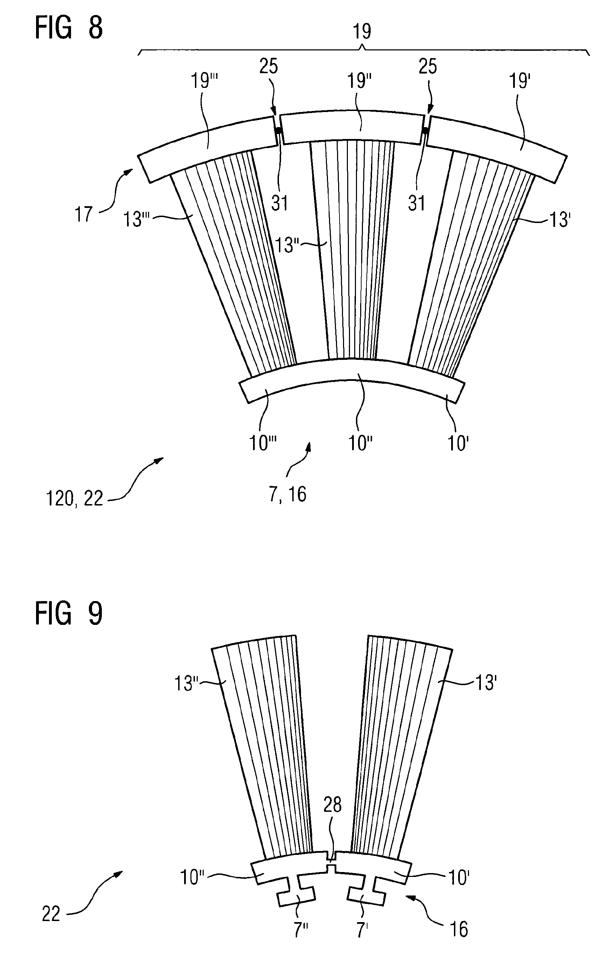

Figur 8 zeigt eine ähnliche Anordnung gemäss Figur 7 für eine einstückigen Turbinenbeschaufelungseinheit 22, die als Laufschaufel 120 wirkt.

Figur 9 zeigt ein weiteres erfindungsgemäßes Ausführungsbeispiel einer einstückigen Turbinenbeschaufelungseinheit 22. Die einstückige Turbinenbeschaufelungseinheit 22 weist hier beispielsweise zwei Schaufelblätter 13' und 13'' auf. Dies ist ein sogenannter Zwilling.
Zwischen den Schaufelplattformbereichen 10' und 10'' ist ein mechanisch verformbarer Bereich 28 ausgebildet. Der mechanisch verformbare Bereich 28 ist gegenüber der Dicke der Schaufelplattform 10 dünner ausgebildet, so dass er mechanisch, insbesondere elastisch, verformbar ist. Er ist einstückig mit den Schaufelplattformbereichen 10' und 10'' ausgebildet.

Der mechanisch verformbare Bereich 28 kann direkt bei dem Gießen hergestellt werden oder durch nachträgliche Verjüngung, d.h. durch Abtragen von Material in diesem Bereich erzeugt werden.

Eine Dichtung entfällt hier, da der mechanisch verformbare Bereich 28 verhindert, dass ein Gasaustausch stattfindet.

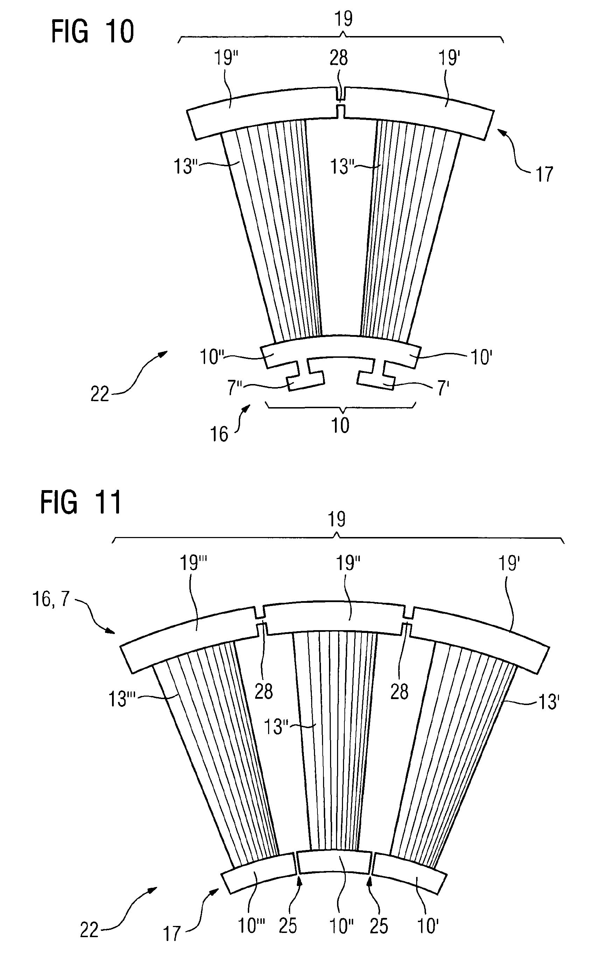

Figur 10 zeigt ein weiteres Ausführungsbeispiel einer erfindungsgemäß ausgebildeten einstückigen Turbinenbeschaufelungseinheit 22.
In diesem Ausführungsbeispiel sind wieder zwei Schaufelblätter 13' und 13'' vorhanden.
Zwischen den Schaufelplattformbereichen 10' und 10'' im Bereich des Schaufelfußes 16 ist keine mechanisch verformbare Verbindung vorhanden.

Jedoch ist eine mechanisch verformbare Verbindung 28 zwischen den Schaufelplattformbereichen 19', 19'' am Kopfteil 17 der Turbinenbeschaufelungseinheit 22 vorhanden.

Figur 11 zeigt ein weiteres Ausführungsbeispiel einer erfindungsgemäß ausgebildeten einstückigen Turbinenbeschaufelungseinheit 22. Diese kann als Lauf- oder, wie hier dargestellt, als Leitschaufel ausgebildet sein.
Ein Spalt 25 ist im Kopfteil 17 zwischen den Schaufelplattformbereichen 10', 10" und 10''' vorhanden. Ebenso kann dort auch wiederum eine Dichtung 31 vorhanden sein.
Zwischen den Schaufelplattformbereichen 19', 19'' und 19''' im Fußbereich 16 ist beispielsweise jeweils ein mechanisch verformbarer Bereich 28 ausgebildet.
Somit sind sowohl die Schaufelplattformbereiche 10', 10'', 10''' gegeneinander beweglich angeordnet als auch die Schaufelplattformen 19', 19'', 19''' gegeneinander beweglich angeordnet.

Die Figur 12 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.
Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt.
Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, werden diese mittels eines Kühlmittels gekühlt.
Ebenso können die Substrate eine gerichtete Struktur aufweisen, d.h. sie sind einkristallin (SX-Struktur) oder weisen nur längsgerichtete Körner auf (DS-Struktur).
Als Material werden eisen-, nickel- oder kobaltbasierte Superlegierungen verwendet.
Ebenso können die Schaufeln 120, 130 Beschichtungen gegen Korrosion (MCrA1X; M ist zumindest ein Element der Gruppe Eisen (Fe), Kobalt (Co), Nickel (Ni), X steht für Yttrium (Y) und/oder zumindest ein Element der Seltenen Erden) und Wärme durch eine Wärmedämmschicht aufweisen. Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

In Figur 13 ist beispielhaft eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließendes Außengehäuse 315 auf. Die Hochdruck-Teilturbine 300 ist beispielsweise in Topfbauart ausgeführt. Die Mitteldruck-Teilturbine 303 ist zweiflutig ausgeführt. Es ist ebenfalls möglich, daß die Mitteldruck-Teilturbine 303 einflutig ausgeführt ist. Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinenwelle 309 in der Hochdruck-Teilturbine 300 die Hochdruck-Laufbeschaufelung 354, 357 auf. Diese Hochdruck-Laufbeschaufelung 354, 357 stellt mit den zugehörigen, nicht näher dargestellten Laufschaufeln einen ersten Beschaufelungsbereich 360 dar. Die Mitteldruck-Teilturbine 303 weist einen zentralen Dampfeinströmbereich 333 auf. Dem Dampfeinströmbereich 333 zugeordnet weist die Turbinenwelle 309 eine radialsymmetrische Wellenabschirmung 363, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354, 342 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

Die Turbinenwelle 309 ist aus zwei Teilturbinenwellen 309a und 309b zusammengesetzt, die im Bereich des Lagers 318 fest miteinander verbunden sind. Jede Teilturbinenwelle 309a, 309b weist eine als zentrale Bohrung 372a entlang der Rotationsachse 306 ausgebildete Kühlleitung 372 auf. Die Kühlleitung 372 ist mit dem Dampfaustrittsbereich 351 über eine radiale Bohrung 375a aufweisende Zuströmleitung 375 verbunden. In der Mitteldruck-Teilturbine 303 ist die Kühlmittelleitung 372 mit einem nicht näher dargestellten Hohlraum unterhalb der Wellenabschirmung 363 verbunden. Die Zuströmleitungen 375 sind als radiale Bohrungen 375a ausgeführt, wodurch "kalter" Dampf aus der Hochdruck-Teilturbine 300 in die zentrale Bohrung 372a einströmen kann. Über die insbesondere auch als radial gerichtete Bohrung 375a ausgebildete Abströmleitung 372 gelangt der Dampf durch den Lagerbereich 321 hindurch in die Mitteldruck-Teilturbine 303 und dort an die Manteloberfläche 330 der Turbinenwelle 309 im Dampfeinströmbereich 333. Der durch die Kühlleitung strömende Dampf hat eine deutlich niedrigere Temperatur als der in den Dampfeinströmbereich 333 einströmende zwischenüberhitzte Dampf, so daß eine wirksame Kühlung der ersten Laufschaufelreihen 342 der Mitteldruck-Teilturbine 303 sowie der Manteloberfläche 330 im Bereich dieser Laufschaufelreihen 342 gewährleistet ist.

## Patentansprüche

1. Einstückige Turbinenbeschaufelungseinheit (22), die aufweist:
zumindest zwei Schaufelblätter (13', 13'', 13'''), wobei an ein Schaufelblatt (13', 13'', 13''') zumindest eine Schaufelplattform (10, 19),
insbesondere zwei Schaufelplattformen (10, 19) angrenzen, die in Schaufelplattformbereiche (10', 10'', 10''', 19', 19'', 19''') unterteilt sind,
wobei zumindest zwei Schaufelplattformbereiche (10', 10'', 10''', 19', 19'', 19''') einer Schaufelplattform (10, 19) untereinander beweglich sind.

2. Einstückige Turbinenbeschaufelungseinheit
nach Anspruch 1,
**dadurch gekennzeichnet, dass**
eine Schaufelplattform (10, 19) im Bereich eines Schaufelfußes (16) der Turbinenbeschaufelungseinheit (22) angeordnet ist.

3. Einstückige Turbinenbeschaufelungseinheit
nach Anspruch 1 oder 2,
**dadurch gekennzeichnet, dass**
eine Schaufelplattform (10, 19) im Bereich eines Kopfteils (17) der Turbinenbeschaufelungseinheit (22) angeordnet ist.

4. Einstückige Turbinenbeschaufelungseinheit nach einem oder mehreren der Ansprüche 1, 2 oder 3,
**dadurch gekennzeichnet, dass**
die Turbinenbeschaufelungseinheit (22) als Leitschaufel (130) wirkt.

5. Einstückige Turbinenbeschaufelungseinheit nach einem oder mehreren der Ansprüche 1, 2 oder 3,
**dadurch gekennzeichnet, dass**
die Turbinenbeschaufelungseinheit (22) als Laufschaufel (120) wirkt.

6. Einstückige Turbinenbeschaufelungseinheit
nach Anspruch 4,
**dadurch gekennzeichnet, dass**
die Schaufelplattform (19) an einem Gehäuse (138) einer Turbine (100, 300, 303) befestigt ist.

7. Einstückige Turbinenbeschaufelungseinheit
nach Anspruch 5,
**dadurch gekennzeichnet, dass**
der Schaufelfuß (16) in einer Scheibe (133) auf einer Welle (103) einer Turbine (100, 300, 303) befestigt ist.

8. Einstückige Turbinenbeschaufelungseinheit
nach Anspruch 1,
**dadurch gekennzeichnet, dass**
die jeweiligen Schaufelplattformbereiche (10', 10'', 10''', 19', 19'', 19''') untereinander durch eine mechanisch verformbare Verbindung (28) miteinander verbunden sind,
die einstückig mit den Schaufelplattformbereichen (10', 10'', 10''', 19', 19'', 19''') ausgebildet ist und eine Bewegung der Schaufelplattformbereiche (10', 10'', 10''', 19', 19'', 19''') untereinander ermöglicht.

9. Einstückige Turbinenbeschaufelungseinheit
nach Anspruch 8,
**dadurch gekennzeichnet, dass**
die mechanisch verformbare Verbindung (28) zwischen den Schaufelplattformbereichen (10', 10'', 10''', 19', 19'', 19''') eine gegenüber der Dicke der Schaufelplattform (10, 19) dünnere Verbindung zwischen den Schaufelplattformen (10', 10'', 10''', 19', 19'', 19''') darstellt.

10. Einstückige Turbinenbeschaufelungseinheit
nach Anspruch 8,
**dadurch gekennzeichnet, dass**
die mechanisch verformbare Verbindung (28) zwischen den Schaufelplattformbereichen (19', 19'', 19''') im Bereich eines Schaufelfußes (16) vorhanden ist.

11. Einstückige Turbinenbeschaufelungseinheit
nach Anspruch 8,
**dadurch gekennzeichnet, dass**
die mechanisch verformbare Verbindung (28) zwischen den Schaufelplattformbereichen (10', 10'', 10''') an einem Kopfteil (17) der Turbinenbeschaufelungseinheit (22) vorhanden ist.

12. Einstückige Turbinenbeschaufelungseinheit
nach Anspruch 8,
**dadurch gekennzeichnet, dass**
die mechanisch verformbare Verbindung (28) zwischen den Schaufelplattformbereichen (10', 10'', 10''') im Bereich eines Schaufelfußes (16) und zwischen den Schaufelplattformbereichen (19', 19'', 19''') an einem Kopfteil (17 vorhanden ist.

13. Einstückige Turbinenbeschaufelungseinheit
nach Anspruch 1, 8 oder 10,
**dadurch gekennzeichnet, dass**
die Schaufelplattformbereiche (19', 19'', 19''') im Bereich eines Schaufelfußes (16) miteinander verbunden sind, und
dass die Schaufelplattformbereiche (10', 10'', 10''') an einem Kopfteil (17) jeweils durch einen Spalt (25) voneinander getrennt sind.

14. Einstückige Turbinenbeschaufelungseinheit
nach Anspruch 1 oder 10 bis 13,
**dadurch gekennzeichnet, dass**
die einstückige Turbinenbeschaufelungseinheit (22) zwei Schaufelblätter (13', 13'', 13''') aufweist.

15. Einstückige Turbinenbeschaufelungseinheit
nach Anspruch 1 oder 10 bis 13,
**dadurch gekennzeichnet, dass**
die einstückige Turbinenbeschaufelungseinheit (22) drei Schaufelblätter (13', 13'', 13''') aufweist.

16. Einstückige Turbinenbeschaufelungseinheit
nach Anspruch 1 oder 13,
**dadurch gekennzeichnet, dass**
ein Spalt (25) zwischen den Schaufelplattformbereichen (10', 10'', 10''', 19', 19'', 19''') so bemessen ist, dass der Spalt (25) während des Einsatzes der Turbinenbeschaufelungseinheit (22) durch Erwärmungsdehnung und/oder Verschiebung der Schaufelplattformbereiche (10', 10'', 10''', 19', 19'', 19''') untereinander zumindest teilweise abgedichtet ist.

17. Einstückige Turbinenbeschaufelungseinheit
nach Anspruch 1 oder 13,
**dadurch gekennzeichnet, dass**
zwischen den Schaufelplattformbereichen (10', 10'', 10''', 19', 19'', 19''') zumindest eine Dichtung (31) vorhanden ist.

18. Verfahren zur Herstellung einer einstückigen Turbinenbeschaufelungseinheit nach Anspruch 1, 8, 13, 14 oder 15, wobei die Turbinenschaufel (22) durch ein Gießverfahren hergestellt wird.

19. Verfahren nach Anspruch 18,
**dadurch gekennzeichnet, dass**
ein mechanisch verformbarer Bereich (28) beim Gießverfahren hergestellt wird.

20. Verfahren nach Anspruch 18,
**dadurch gekennzeichnet, dass**
ein mechanisch verformbarer Bereich (28) nachträglich in die Turbinenschaufel (22) eingearbeitet wird.

21. Verfahren nach Anspruch 18,
**dadurch gekennzeichnet, dass**
die Schaufelplattform (10, 19) der Turbinenbeschaufelungseinheit (22) am Kopfteil (17) in zumindest zwei voneinander getrennte Schaufelplattformbereiche (10', 10'', 10''', 19', 19'', 19''') aufgetrennt wird.
